# EUROPEAN PATENT APPLICATION

(11) **EP 3 306 553 A1**
(43) Date of publication of application: **11.04.2018**
(21) Application number: 16803779.4
(22) Date of filing: 03.06.2016
(51) Int. Cl.: G06Q 30/02, G01S 19/01

(54) **ADVERTISEMENT AND REWARD TECHNIQUE IN WIRELESS COMMUNICATION SYSTEM**

(30) Priority: 05.06.2015 KR 20150079751
(71) Applicant: Samsung Electronics Co., Ltd., Suwon-si, Gyeonggi-do 16677 (KR)
(72) Inventor: KIM, Kyung-Kyu, Suwon-si Gyeonggi-do 16677 (KR); CHOI, Sang-Won, Suwon-si Gyeonggi-do 16677 (KR); CHANG, Young-Bin, Suwon-si Gyeonggi-do 16677 (KR); KANG, Bo-Hyun, Suwon-si Gyeonggi-do 16677 (KR); KWUN, Jong-Hyung, Suwon-si Gyeonggi-do 16677 (KR); KIM, Ho-Kyung, Suwon-si Gyeonggi-do 16677 (KR); PARK, Jung-Shin, Suwon-si Gyeonggi-do 16677 (KR); YU, Han-Il, Suwon-si Gyeonggi-do 16677 (KR); LEE, Hyung-Ho, Suwon-si Gyeonggi-do 16677 (KR); LIM, Han-Na, Suwon-si Gyeonggi-do 16677 (KR); HWANG, June, Suwon-si Gyeonggi-do 16677 (KR)
(74) Representative: Nederlandsch Octrooibureau
(86) International application number: PCT/KR2016/005928
(87) International publication number: WO 2016/195426

(57) **Abstract**

The present disclosure relates to a 5G or pre-5G communication system that is to support higher data transmission rates after 4G communication systems such as LTE. The present disclosure provides a communication method by a terminal in a wireless communication system, comprising the operations of: transmitting to a network provider's server information indicating a permission for outputting a banner on a screen of the terminal; receiving from the provider's server a key that is used for filtering a discovery code; receiving the discovery code from one or more access points (AP), and filtering the received discovery code using the key; requesting from the provider's server banner information with respect to the filtered discovery code, and receiving the banner information in response to the request; and outputting a banner on the screen using the received banner information, and transmitting an output report of the banner to the provider's server.

## Description

### [Technical Field]

The present disclosure relates to a communication scheme of a terminal in a wireless communication system, and more particularly, to an advertising and rewarding method in a wireless communication system supporting device-to-device (D2D) communication.

### [Background Art]

To satisfy demands for wireless data traffic having increased since commercialization of 4^{th}-Generation (4G) communication systems, efforts have been made to develop improved 5^{th}-Generation (5G) communication systems or pre-5G communication systems. For this reason, the 5G communication system or the pre-5G communication system is also called a beyond-4G-network communication system or a post-Long-Term Evolution (LTE) system.

To achieve a high data rate, implementation of the 5G communication system in an ultra-high frequency (mmWave) band (e.g., a 60 GHz band) is under consideration. In the 5G communication system, beamforming, massive multi-input multi-output (MIMO), full dimensional MIMO (FD-MIMO), an array antenna, analog beamforming, and large-scale antenna technologies have been discussed to alleviate a propagation path loss and to increase a propagation distance in the ultra-high frequency band.

For system network improvement, in the 5G communication system, techniques such as an evolved small cell, an advanced small cell, a cloud radio access network (RAN), an ultra-dense network, device to device (D2D) communication, a wireless backhaul, a moving network, cooperative communication, coordinated multi-points (CoMPs), and interference cancellation have been developed.

In addition, in the 5G system, hybrid frequency shift keying (FSK) and quadrature amplitude modulation (QAM) (FQAM) and sliding window superposition coding (SWSC) as an advanced coding modulation (ACM) scheme, and a filter bank multi carrier (FBMC) scheme, a non-orthogonal multiple access (NOMA) scheme, and a sparse code multiple access (SCMA) scheme as an advanced access technology have been developed.

A D2D advertising service is effective in a local area and has an actually available potential customer as a target for advertisement. The D2D advertising service allows dynamic advertisement and may change in real time information of advertisement as desired. The D2D advertising service may execute advertisement by targeting a nearby customer, unlike a beacon signal-based advertising service which targets a customer entering a store (or a shop).

Recently, interest in a business model for providing free Internet based on advertisement has been increasing. A representative example of the business model for providing free Internet based on advertisement includes Facebook wireless fidelity (Wi-Fi), etc. For local mid-range customized advertisement, D2D communication is effective. A D2D-based advertising service is capable of providing accurate advertisement for a target.

Thus, a need emerges for an advertisement and reward scheme based on D2D.

The above information is presented as background information only to assist with an understanding of the present disclosure. No determination has been made, and no assertion is made, as to whether any of the above might be applicable as prior art with regard to the present disclosure.

### [Detailed Description of the Invention]

### [Technical Problem]

Accordingly, the present disclosure provides a method for associating target advertisement with free Internet using D2D. The present disclosure also provides a method for delivering an intention of a user equipment (UE) to use free Internet, a method for identifying an advertiser of advertisement presupposing use of free Internet, a method for changing a charging policy, a method for identifying a start and an end of execution of a reduction and exemption policy, and a method for improving effectiveness of advertisement.

Moreover, the present disclosure provides a scheme for solving user's reluctance to receive D2D advertisement.

The present disclosure also provides a method in which an advertiser incorporates agreement with a network operator, such as charge reduction and exemption, etc., in a part of a beacon transmitted by a store.

The present disclosure provides a method for transmitting a key for interpreting advertisement only to a user for which an operator activates a banner.

Furthermore, the present disclosure provides a method in which a paging view is counted in response to an advertisement request from a user and an operator provides advertisement if no advertisement is sensed for a predetermined time or longer.

The present disclosure also provides a method in which an operator changes a charging policy of a user who receives advertisement.

### [Technical Solution]

The present disclosure proposes a communication method of a UE in a wireless communication system, the communication method including transmitting information indicating a permission for outputting a banner on a screen of the UE to a network operator server, receiving a key used to filter a discovery code from the operator server, receiving the discovery code from at least one access point (AP) and filtering the received discovery code by using the key, transmitting a request for banner information regarding the filtered discovery code to the operator server and receiving the banner information in response to the request, and outputting the banner on the screen by using the received banner information and transmitting an output report of the banner to the operator server.

The present disclosure also proposes a communication method of a network operator server in a wireless communication system, the communication method including receiving information indicating a permission for outputting a banner on a screen from a UE, transmitting a key used to filter a discovery code to the UE, receiving a request for banner information regarding the discovery code and transmitting the banner information to the UE in response to the request, receiving an output report of the banner from the UE, and changing a charging policy of the UE based on the output report of the banner.

Moreover, the present disclosure proposes a UE in a wireless communication system, the UE including a controller configured to transmit information indicating a permission for outputting a banner on a screen of the UE to a network operator server, to receive a key used to filter a discovery code from the operator server, to receive the discovery code from at least one access point (AP) and filter the received discovery code by using the key, to transmit a request for banner information regarding the filtered discovery code to the operator server and receive the banner information in response to the request, and to output the banner on the screen by using the received banner information and transmit an output report of the banner to the operator server, and a display configured to output the banner on the screen under control of the controller.

Furthermore, the present disclosure proposes a network operator server in a wireless communication system, the network operator server including a transceiver configured to communicate with at least one UE and a controller configured to receive information indicating a permission for outputting a banner on a screen from the UE, to transmit a key used to filter a discovery code to the UE, to receive a request for banner information regarding the discovery code and transmit the banner information to the UE in response to the request, to receive an output report of the banner from the UE, and to change a charging policy of the UE based on the output report of the banner.

### [Advantageous Effects]

According to the present disclosure, a charge reduction and exemption scheme is applicable to a user who watches advertisement by using a D2D search signal.

### [Brief Description of Drawings]

FIG. 1 illustrates an advertising service provided in a wireless communication system that supports a D2D scheme according to the present disclosure;
FIG. 2 illustrates advertising scenarios in a wireless communication system that supports a D2D scheme according to the present disclosure;
FIG. 3 illustrates an operation process in view of UX in Advertisement Scenario 1 in a wireless communication system that supports a D2D scheme according to the present disclosure;
FIG. 4 illustrates details of Advertisement Scenario 1 in a wireless communication system that supports a D2D scheme according to the present disclosure;
FIG. 5 is a ladder diagram of Advertisement Scenario 1 in a wireless communication system that supports a D2D scheme according to the present disclosure;
FIG. 6 illustrates an operation in case of occurrence of an advertisement click event of a proximity service (ProSe) application in a system structure;
FIG. 7 illustrates an operation process in view of UX in Advertisement Scenario 2 in a wireless communication system that supports a D2D scheme according to the present disclosure;
FIG. 8 illustrates details of Advertisement Scenario 2 in a wireless communication system that supports a D2D scheme according to the present disclosure;
FIG. 9 is a ladder diagram of Advertisement Scenario 2 in a wireless communication system that supports a D2D scheme according to the present disclosure;
FIG. 10 illustrates details of Advertisement Scenario 3 in a wireless communication system that supports a D2D scheme according to the present disclosure;
FIG. 11 is a ladder diagram of Advertisement Scenario 3 in a wireless communication system that supports a D2D scheme according to the present disclosure;
FIG. 12 illustrates additional Scenario 1 using geo-fencing in a wireless communication system that supports a D2D scheme according to the present disclosure;
FIG. 13 is a ladder diagram of additional Scenario 1 in a wireless communication system that supports a D2D scheme according to the present disclosure;
FIG. 14 illustrates additional Scenario 2 using a polling service in a wireless communication system that supports a D2D scheme according to the present disclosure;
FIG. 15 is a ladder diagram of a method for setting a response period for polling in additional Scenario 2 in a wireless communication system that supports a D2D scheme according to the present disclosure;
FIG. 16 illustrates UX driving of a terminal according to the present disclosure;
FIG. 17 is a block diagram of a terminal according to an embodiment of the present disclosure;
FIG. 18 is a block diagram of a store AP according to an embodiment of the present disclosure; and
FIG. 19 is a block diagram of a network operator server device according to an embodiment of the present disclosure.

### [Mode for Carrying out the Invention]

Hereinafter, embodiments of the present disclosure are described in detail with reference to the accompanying drawings. In the following description of the present disclosure, a detailed description of well-known functions or elements associated with the present disclosure will be omitted if it unnecessarily obscures the subject matter of the present disclosure. The terms as used herein are defined considering the functions in the present disclosure and may be replaced with other terms according to the intention or practice of the user or operator. Therefore, the definitions should be made based on the contents throughout the entire description of the present disclosure.

Before a detailed description of the present disclosure is made, examples of interpretable meanings will be provided for several terms used herein. However, it should be noted that the meanings of the terms are not limited to the examples provided below.

According to various embodiments of the present disclosure, a signal receiving device may be a user equipment (UE) or an advertising device. According to various embodiments of the present disclosure, a signal transmitting device may be a UE or an advertising device.

In the present disclosure, the term "user equipment" may be used interchangeably with terms such as a UE, a mobile station (MS), a user device, a device, a subscriber station, a wireless terminal, and the like.

Also, in the present disclosure, the term "base station (BS)" may be used interchangeably with terms such as a node B, an evolved node B (eNodeB or eNB), an access point (AP), and the like.

In the present disclosure, a banner refers to contents in various forms (a text, an image, a moving image, a graphics interchange format (GIF), flash, etc.) that are output on a display unit of a UE or a part thereof, and may include advertising contents.

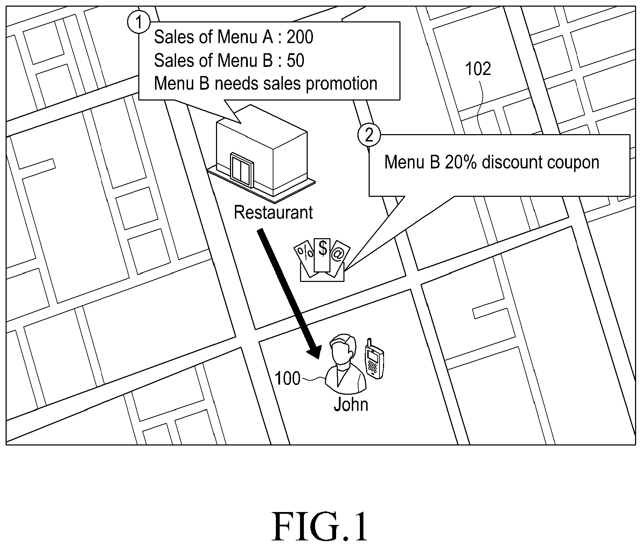

FIG. 1 illustrates an advertising service provided in a wireless communication system that supports a D2D scheme according to the present disclosure.

A D2D advertising service provided in a wireless communication system supporting a D2D scheme according to the present disclosure will be described with reference to FIG. 1. As illustrated in FIG. 1, the D2D advertising service may be provided when a customer is situated near a store, unlike a beacon advertising service provided when the customer enters the store.

A beacon signal for a beacon advertising service may be transmitted from an advertising device installed in a store periodically or due to an event, and a UE having received the beacon signal filters information that matches information of the UE or the like. The beacon advertising service provides advertisement to a target UE that satisfies advertising conditions from among UEs that are located in distances where the UEs are capable of receiving the beacon signal transmitted by the advertising device and are using the same application.

On the other hand, the advertising device executing the D2D advertising service actively transmits an advertising message, taking a current inventory state or a promotion situation of the store, etc., into account. For example, if the sales of a menu B are not enough and thus need to be promoted, the advertising device transmits an advertising message 102 regarding the menu B to provide an advertising service to customers 100 situated around the restaurant.

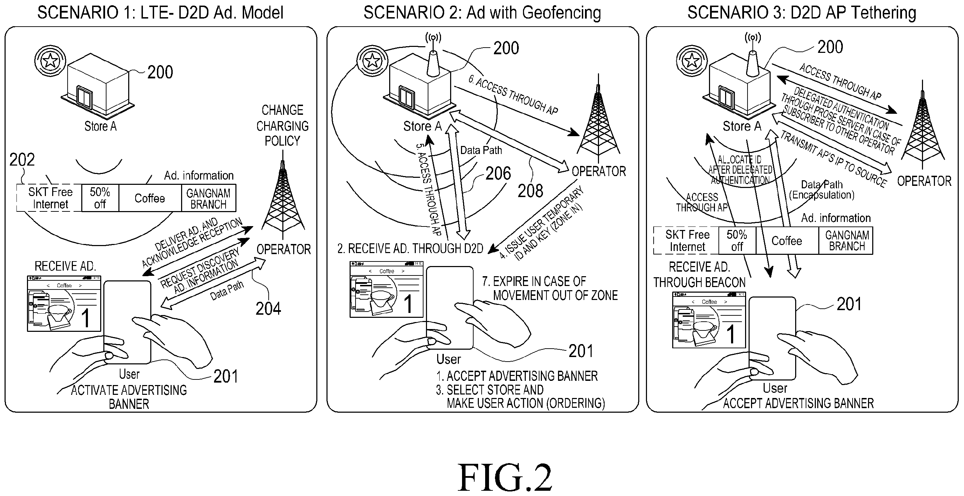

FIG. 2 illustrates advertising scenarios in a wireless communication system that supports a D2D scheme according to the present disclosure.

In FIG. 2, Scenario 1 illustrates an LTE-D2D advertising scenario where a UE uses a licensed band of an operator to which the UE subscribes, Scenario 2 illustrates an advertising scenario of geofencing using an unlicensed band between APs regardless of the UE's subscription, and Scenario 3 illustrates a D2D AP tethering use advertising scenario using a licensed band regardless of the UE's subscription. Scenario 1, Scenario 2, and Scenario 3 will be described respectively.

Scenario 1 of FIG. 2 shows a reward in such a way that a UE 201 receives a D2D beacon signal 202 sent from an advertising device installed in a store 200 and consents to reception of advertisement so as to be provided with a free data path 204 between LTE base stations.

In Scenario 2 of FIG. 2, if accepting reception of an advertising banner transmitted through a D2D signal, when the UE enters a geofence (a geographically separated area) of a store and orders in the store, the UE may be provided with convenience such as use of an LTE network through an AP in the store.

A detailed description will be made of Scenario 2.

If the UE accepts reception of an advertising banner transmitted through a D2D signal, the UE receives the advertising banner based on a D2D advertising service. The UE may input a command such as store selection, product (service) ordering, or the like. Then, the UE may receive user temporary identifier (ID) and key from a network operator. Herein, the user temporary ID and key may be used to connect to the LTE network through the AP of the store. The UE may access the LTE network through the AP based on the allocated user temporary ID and key. If the UE goes out of a zone, the temporary ID and key expire. That is, in the current scenario, data paths 206 and 208 from the UE to the LTE network pass through the AP of the store.

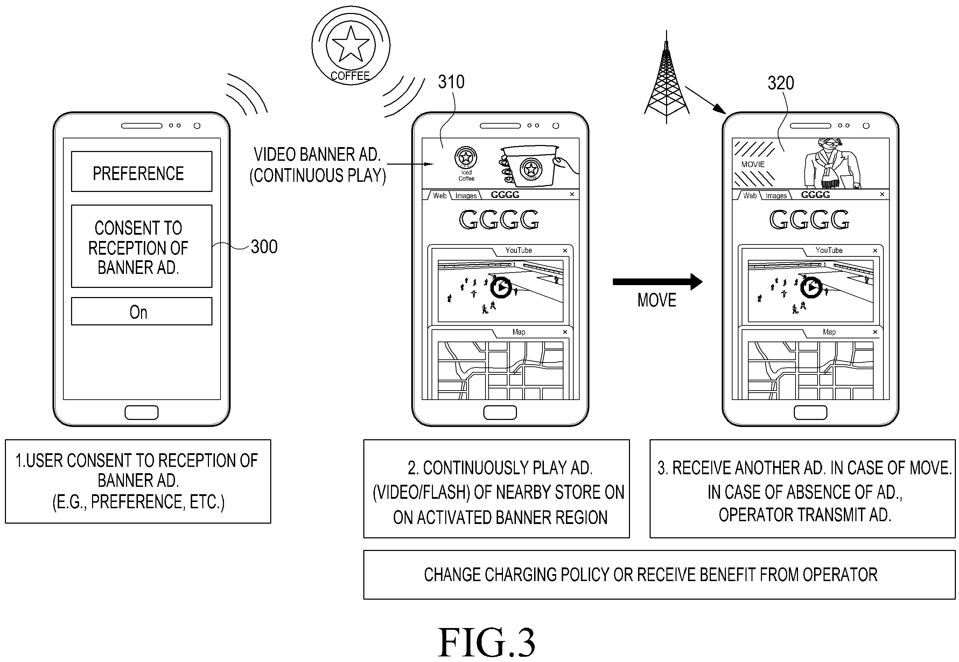

In Scenario 3 of FIG. 2, the UE, which has received the D2D beacon signal 202 transmitted from the AP of the store 200, agreed with reception of advertisement, and been authenticated, is provided with a data service in a tethering manner from the AP of the store. The AP of the store may be authenticated by the LTE network in place of the UE and may set up a data path. Thus, the UE may access the LTE network through the AP of the store. FIG. 3 illustrates an operation process in view of a user experience (UX) in Advertisement Scenario 1 in a wireless communication system that supports a D2D scheme according to the present disclosure.

Referring to FIG. 3, the UE detects consent with reception of banner advertisement. Herein, the consent to reception of banner advertisement may be implemented based on various schemes such as a preference (or environment setting) screen 300, a pop-up, and so forth.

Thereafter, if the UE arrives near a store that provides a D2D advertising service and receives an advertising message from an advertising device disposed in the store, the UE outputs information corresponding to an advertising message 310 on a part of an application such as an Internet browser or a part of a display of the UE. Herein, the information corresponding to the advertising message may include advertisement, e.g., a picture, an image, a flash, a graphic interface format (GIF), and so forth. The information corresponding to the advertising message may be continuously played until a new advertising message is received. If the UE receives another advertising message for various reasons such as movement, etc., then the UE outputs information corresponding to another advertising message 320. That is, the information corresponding to the advertising message may be changed for a reason such as movement of the UE. If another advertising message is not received even through some reason such as movement of a device occurs, advertisement provided by a network operator may be output on a corresponding region.

Since the UE receives advertisement after consenting to an advertising policy, the UE may be provided with predetermined benefits from an owner of the store or the network operator. Herein, the benefits may include data charge reduction, point saving, and so forth.

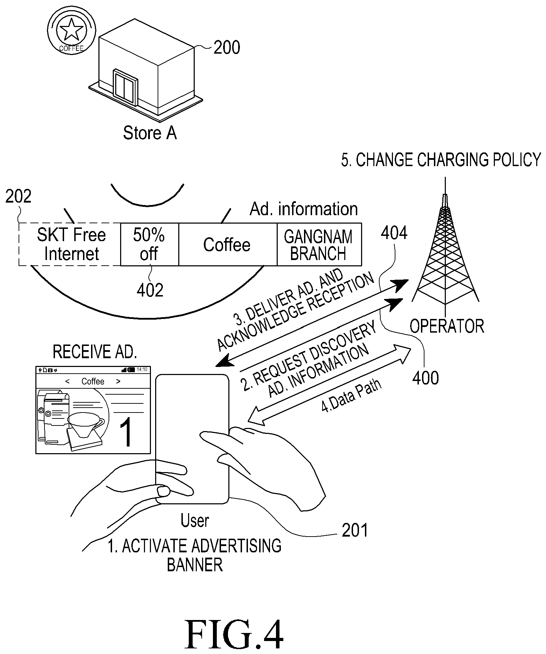

FIG. 4 illustrates details of Advertisement Scenario 1 in a wireless communication system that supports a D2D scheme according to the present disclosure.

FIG. 4 shows a model in which the UE 201 uses a licensed band of a network operator to which the UE 201 subscribes by the store 200. Once reception of banner advertisement output to the UE 201 is activated by the user, the UE 201 informs the operator that the reception of banner advertisement is activated and requests the operator to transmit advertisement as indicated in 400. An advertiser (i.e., the store) may include agreement information 402 with the operator, such as charge reduction, etc., in a part of the beacon signal 202 transmitted by the store 200. The operator may transmit a key for interpreting advertisement only to a user having activated a banner. The UE receives advertisement and makes a report corresponding to advertisement reception through a discovery signal as indicated in 404. The UE filters a discovery message through a code and then performs advertisement information inquiry and reception authentication for the operator. In this case, there may be various embodiments. The UE may receive advertisement in order of high signal strength (SS), in order of premium advertiser, or in order of relation with a page the user currently watches. An entity of the operator network may determine reception of advertisement by the UE, and may determine whether the UE has actually received advertisement, for example, through an authentication code included in a reception acknowledgement message 404 transmitted by the UE.

In FIG. 4, in response to an advertising request 400 of the UE 201, the operator entity counts a paging view, or directly provides advertisement if acknowledgement of reception of advertisement is not sensed for a predetermined time or longer. In this case, the operator may change the charging policy of the user who receives advertisement. For example, the operator may change the user's charging policy into free or charge reduction, etc.

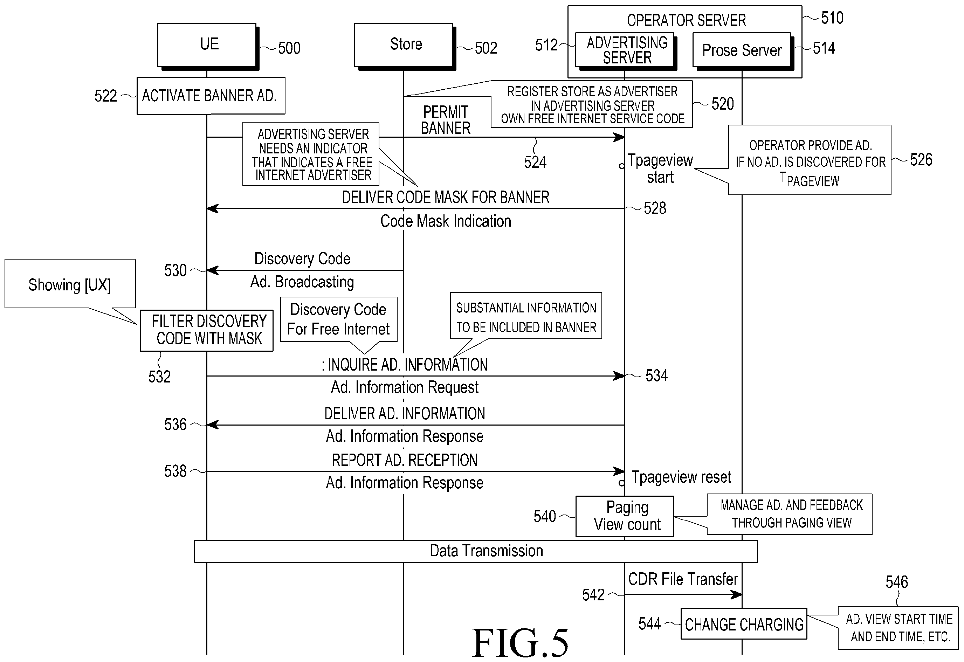

FIG. 5 is a ladder diagram of Advertisement Scenario 1 in a wireless communication system that supports a D2D scheme according to the present disclosure.

A store 502 is registered as an advertiser at an advertising server 512 through an operator's advertising policy and obtains a delimiter (e.g., a 'free Internet code') for a rewarding advertisement in operation 520. While the advertising server 512 and a proximity service (ProSe) server 514 are illustrated separately in FIG. 5 to facilitate understanding, the advertising server 512 and the ProSe server 514 may be referred to as an 'operator server' 510.

When banner advertisement is activated in operation 522, a UE 500 delivers information indicating that the banner advertisement is allowed to the advertising server 512 in operation 524. The information indicating that the banner advertisement is allowed may be input from a user through a preference menu or a pop-up menu, etc. As such, by receiving information indicating whether the banner is allowed from the user in advance, a possibility of reluctance of the user occurring when D2D advertisement is received against user's intention may be prevented.

Upon reception of the indication information, a timer for the UE 500 may start in the advertising server 512 or a timer may start in the UE 500. If there is no discovered advertising beacon during a specific time T_{pageview}, the timer expires, and in this case, the advertising server 512 directly provides advertisement in operation 526. The advertisement provided by the advertising server 512 may be transmitted according to a region, an event, user preference, and so forth. The advertising server 512 delivers a key (e.g., a code mask indicating an advertiser giving benefits) to be used for interpreting a code of an AP transmitting advertisement to the UE 500 in operation 528. The code mask filters a store subscribing to the operator to output banner advertisement. For example, the key may indicate that the store filtered by the key provides free Internet. The code mask may be later used as a key for the UE to filter a beacon including advertisement from among a received beacon (e.g., a discovery code).

Once receiving a discovery code that is a D2D beacon from the store 502, the UE 500 filters the discovery code through code masking using the key in operation 532. In this case, reception of the discovery code by the UE 500 may be notified through a display.

If the filtered discovery code is advertisement including benefits, the UE 500 inquires the advertising server 512 about information about the advertisement in operation 534. The advertising server 512 delivers the advertisement information in operation 536, and the UE 500 receives the advertisement information and outputs the advertisement information on the display. For example, the advertisement may be output as the banner on the screen of the UE. If two or more banners are output, the UE may output the banners by giving priority to the banners in order of SS of the discovery code. That is, the UE 500 may output a banner having a higher priority first or on the topmost part of the screen. A high priority may be given to a banner having a high relation with content currently output on the screen of the UE 500.

The UE 500 reports the advertising server 512 of output of the advertisement (i.e., the banner) in operation 538. The advertising server 512 counts paging view of each advertisement by using the banner output report in operation 540.

The advertising server 512 generates and delivers a charging data record (CDR) file that records a charge to the ProSe server 514 that manages the charge in operation 542, and the ProSe server 514 calculates a time for which the UE views (i.e., outputs) advertisement based on the banner output report in operation 546. If a benefit provided to the UE 500 is a data charge reduction from an operator, the ProSe server 514 changes a charge (e.g., reduces the charge) by considering a time during which the UE views the advertisement.

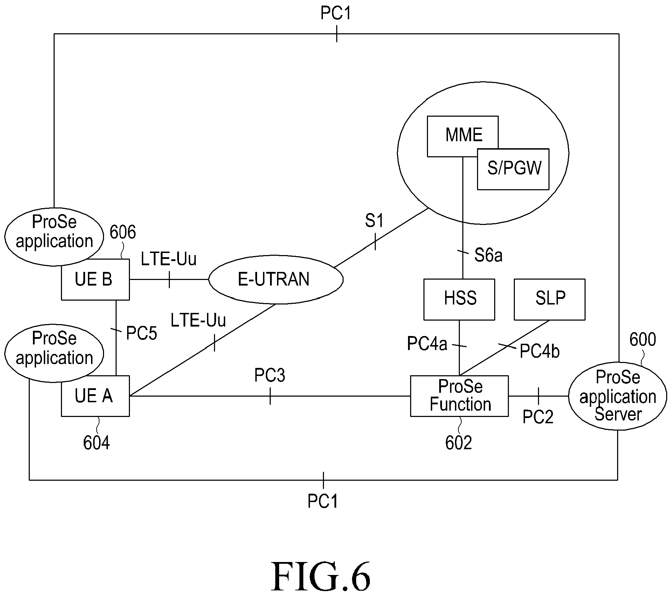

FIG. 6 illustrates an operation in case of occurrence of an advertisement click event of a ProSe application in a system structure.

In an embodiment of FIG. 6, an interface PC2 is used between a ProSe application server 600 and a ProSe function 602. The ProSe application server 600 is an entity in charge of triggering of a ProSe application. An interface PC1 is used to deliver information of the ProSe application from UEs 604 and 606 to the ProSe application server 600. An interface PC2 is used for the ProSe function 602 to receive information of the ProSe application, and the information of the ProSe application is used for the ProSe function 602 to generate a charging data function (CDF).

In another embodiment, an interface between a ProSe manager and the ProSe function may be used. The ProSe manager is in charge of triggering of the ProSe application, and the UE obtains triggering information of the ProSe manager. An interface PC3 is used to deliver information of the ProSe application to the ProSe function. The ProSe function may generate the CDF.

In another embodiment, an interface between the ProSe application and a policy and charging rules function (PCRF) is used.

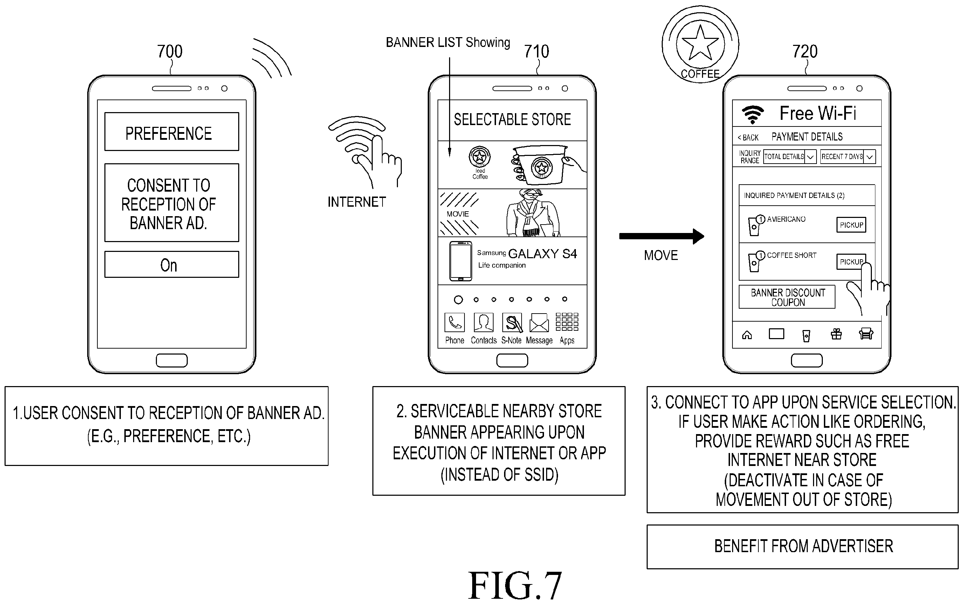

FIG. 7 illustrates an operation process in view of UX in Advertisement Scenario 2 in a wireless communication system that supports a D2D scheme according to the present disclosure.

A UE receives input of consent to banner advertisement reception from a user. The consent to banner advertisement reception may be input to the UE in various ways such as apreference menu 700, a pop-up, etc.

If an application using Internet is executed or Wi-Fi preference is driven, a list of advertising banners (e.g., pictures, images, flashes, GIFs, etc.) of stores capable of providing a service (i.e., a service providing a reward for advertisement reception) may be output on the screen of the UE as indicated by 710. Each output advertising banner may correspond to a service set identifier (SSID) that is an ID of a provided WLAN.

Upon selection of any one of the advertising banners, if there is an application of a store corresponding to the selected banner, the application is connected in operation 720. If an additional condition is satisfied (e.g., a product is ordered and payed), the user may be provided with an additional reward. For example, the additional reward may be free music (e.g., mp3 file) downloading, free Internet connection, and so forth. Optionally, the reward may be deactivated if the UE moves out of the store.

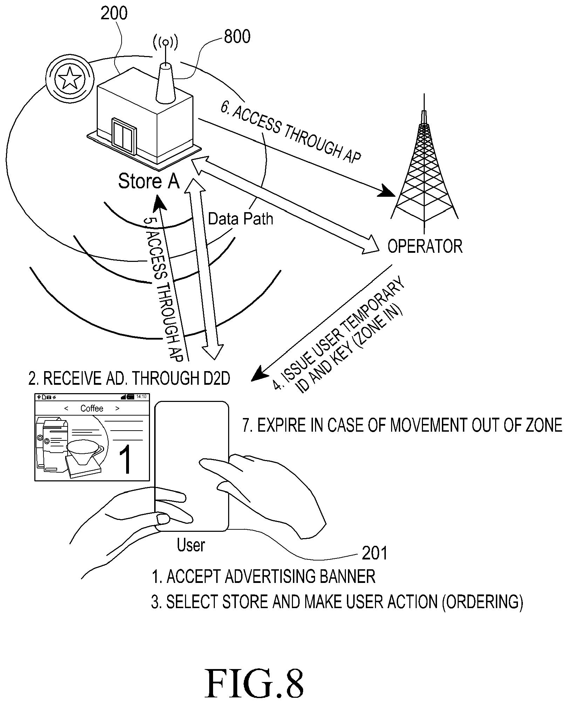

FIG. 8 illustrates details of Advertisement Scenario 2 in a wireless communication system that supports a D2D scheme according to the present disclosure.

In the scenario of FIG. 8, an AP operating in an operator (other operators) to which the store does not subscribe or in an unlicensed band is used.

In FIG. 8, if the UE 201 using an access point name (APN) of the operator completes an access procedure to an AP 800 of the store, the AP 800 accesses a server of the operator and authenticates the UE. If the user of the UE is a user who does not use an APN of the operator, the operator asks the user whether to receive banner advertisement. If the user consents to reception of the banner advertisement, the operator gives a temporary ID, key, or IP enabling connection to the operator's network to the user, such that the UE may access the AP.

Advertisement reception of the UE may have two options. The first option is reception of advertisement by the UE from an operator of a nearby store using an AP-based local based service (LBS), and the second option is UE's reception of a beacon in a category used by a store subscribing to a particular operator.

In FIG. 8, the UE 201 receives D2D advertisement from the nearby store based on the LBS and shows a part of accessible advertisement as a banner. The UE 201 receives a beacon signal having the category used by the store subscribing to the operator.

In this case, the UE 201 outputs advertisement corresponding to a signal on the screen in order of high SS. Alternatively, a premium advertiser may be preferentially output. Alternatively, advertisement related to a page the user currently views may be preferentially shown.

The UE 201 reports operator's reception of authentication advertisement. If advertisement of the store is not sensed near a particular AP for a predetermined time or longer, the operator may directly provide advertisement.

In FIG. 8, upon occurrence of a particular event (e.g., ordering, payment, etc.) by the user, a temporary ID or key for the user is issued and if the user enters a designated zone, connection through the AP may be activated.

In FIG. 8, if the user is out of the designated zone for a predetermined time or more, the operator may return or terminate the temporary ID or key. Alternatively, the operator may further continuously transmit advertisement and maintain the ID or key without terminating the ID or key (by doing so, re-inquiry is not needed during activation). Meanwhile, the temporary ID and the IP for the user's access may be released after the elapse of a predetermined time without the user's report of advertisement reception.

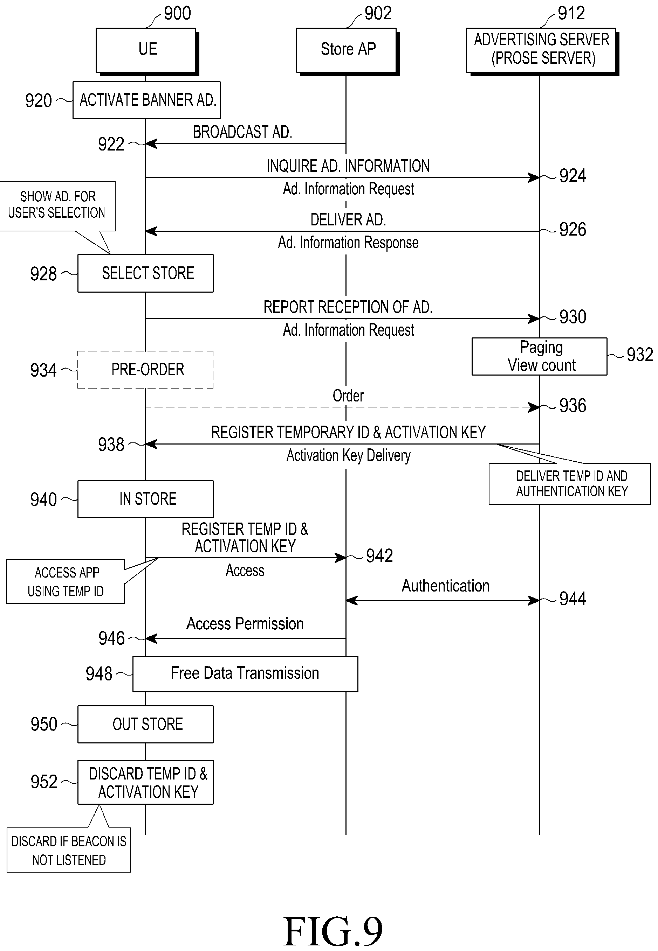

FIG. 9 is a ladder diagram of Advertisement Scenario 2 in a wireless communication system that supports a D2D scheme according to the present disclosure.

If a UE 900 receives an advertisement beacon broadcast from an AP of a store 902 in operation 922 after activating banner advertisement reception in operation 920, the UE 900 inquires an advertising server (or a ProSe server) 912 about advertisement information in operation 924 and the advertising server 912 delivers advertisement to the UE 900 in operation 926.

The advertisement may be output on the screen of the UE 900 as shown in FIGs. 7 and 8.

If the store 902 is selected from a list of banners output on the screen of the UE 900 in operation 928, the UE 900 transmits a report indicating advertisement reception to the advertising server 912 in operation 930. The advertising server 912 counts a paging view in operation 932 to measure reception information of advertisement (i.e., whether the UE receives advertisement or not, withdrawal of the reception, etc.).

Thereafter, the UE 900 performs an operation such as ordering related to the advertisement in operation 934, and information about the ordering may be transmitted to the advertising server 912 in operation 936.

The advertising server 912 delivers a temporary ID or activation key for accessing the AP of the store 902 to the UE 900 in operation 938. The validity of (or whether to activate) the temporary ID and key may be restricted by time or a place.

Once the UE 900 enters the store 902 in operation 940, thus becoming communicable with the AP of the store 900, then the UE 900 delivers the temporary ID and the activation key to the AP for authentication in operation 942.

The AP of the store 900 delivers the received ID and key to the advertising server 912 which then determines whether the received ID and key are the same as the ID and key that have been issued by the advertising server 912, thus authenticating the UE 900 in operation 944.

Once the UE 900 is authenticated, the AP of the store 902 transmits an access permission to permit access of the UE in operation 946. In this way, the UE 900 transmits and receives data to and from the operator network through the AP of the store 902 in operation 948.

If the UE 900 moves out of the store 902, thus being unable to receive a beacon signal any more or to connect with the AP of the store 902 in operation 950, the temporary ID and the activation key may be discarded in operation 952.

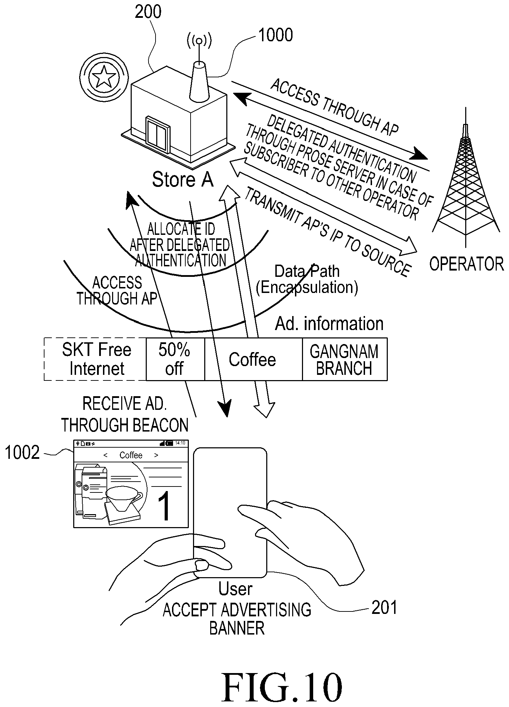

FIG. 10 illustrates details of Advertisement Scenario 3 in a wireless communication system that supports a D2D scheme according to the present disclosure.

In FIG. 10, a method and a device for using another APN according to a communication type in one modem are illustrated.

In FIG. 10, the operator installs a D2D AP 1000 in the store 200, and the store 200, when transmitting a designated discovery code, may deliver mini advertisement in a broadcasting area, together with the discovery code.

In FIG. 10, once the UE 201 consents to banner activation, the UE 201 receives and outputs one banner or a list of banners as in an illustrated UX driving example 1002. If the user clicks advertisement the user desires to connect to on the UE 201, the UE 201 broadcasts a request for the advertisement. In this case, the AP 1000 performs authentication for access of the UE 201 in place of the UE 201. To manage access of the UE 201 in a transmission area of the D2D AP 1000, the D2D AP 1000 may provide a temporary D2D radio network temporary identifier (RNTI) to the UE 201 or reallocate an IP to the UE 201 if necessary. In this case, the UE 201 may have media access control (MAC) level ID and IP for respective access schemes. The UE 201 broadcasts its data to a D2D resource region, and the AP 1000 relays the broadcast data to deliver the data to the operator network. Selectively, the UE 201 may be configured to automatically access an advertising banner in order of a high SS as in Advertisement Scenario 1 of the present disclosure, without user's click of the advertising banner. Selectively, the UE performs handover between APs of the store during movement.

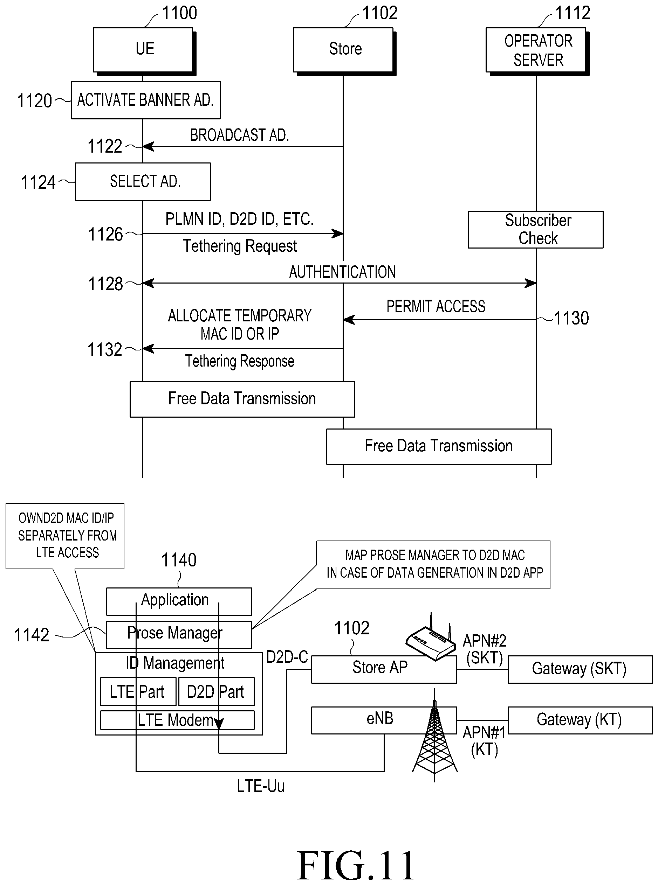

FIG. 11 is a ladder diagram of Advertisement Scenario 3 in a wireless communication system that supports a D2D scheme according to the present disclosure.

A UE 1100 receives input of consent to activation of banner advertisement from a user in operation 1120. The consent to activation of the banner advertisement may be input to the UE 1100 in various ways such as apreference menu, a pop-up, etc.

The UE 1100 receives advertisement broadcast from an AP of a store 1102 and outputs the advertisement on a screen in operation 1122, and if user's selection of arbitrary advertisement is input in operation 1124, the UE 1100 requests tethering by delivering a public land mobile network (PLMN) ID and a D2D ID obtained from a D2D discovery code to the AP of the store 1102 in operation 1126.

An operator server 1112 authenticates the ID received from the store AP 1102 in operation 1128, and delivers an access permission command to the AP 1102 of the store in operation 1130. In this case, the store AP 1102 provides information necessary for access, such as the temporary MAC ID and IP, to the UE 1100 in operation 1132.

When data is generated in a D2D application 1140 of the UE 1100, the application 1140 uses the provided MAC ID and IP for D2D. In this case, a ProSe manager 1142 of the UE 1100 secures the MAC ID and IP for D2D separately from LTE connection. Thus, even if the store AP 1102 is an AP managed by another operator to which the UE 1100 does not subscribe, the UE 1100 may perform D2D communication through the store AP 1102. In this way, by delivering data through the provided information, the store AP 1102 provides tethering to the UE 1100.

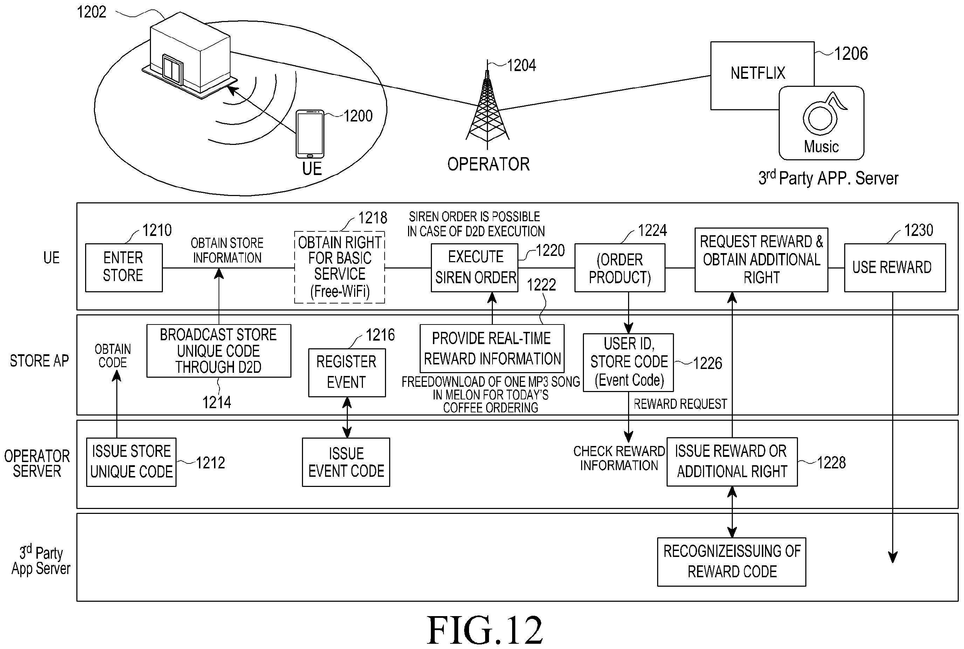

FIG. 12 illustrates additional Scenario 1 using geo-fencing in a wireless communication system that supports a D2D scheme according to the present disclosure.

Once a UE 1200 enters a store 1202 in operation 1210, the UE 1200 obtains a unique code of the store 1202 in operation 1214. The unique code of the store 1202 may be issued to the store 1202 by an operator 1204 in advance in operation 1212. The store 1202 previously registers an event to be executed and a reward corresponding thereto in operation 1216.

The UE 1200 having obtained the unique code of the store 1202 executes a basic service, etc., using the code. For example, the basic service may be free Internet (Wi-Fi) in operation 1218.

Thereafter, once an event such as execution of a D2D order application occurs in the UE 1200 in operation 1220, real-time reward information for the event is provided to the UE 1200 from the store 1202. For example, the real-time reward may be "a free download of one MP3 song in a sound source site for ordering of today's coffee".

If a condition of the event is satisfied in operation 1224 (that is, an order is made), an ID of the user and the unique code of the store are transmitted to the operator server 1204 in operation 1226.

The operator server 1204 receives a reward code issued by a 3^{rd} party application server 1206 (e.g., a content providing site such as Netflix) and delivers the reward code to the UE 1200 in operation 1228.

The UE 1200 having received the reward code accesses the 3^{rd} party application server and uses a reward (e.g., a download of content) in operation 1230. Optionally, if the UE 1200 moves out of the store 1202 and thus may not be able to receive the store code, the reward may expire.

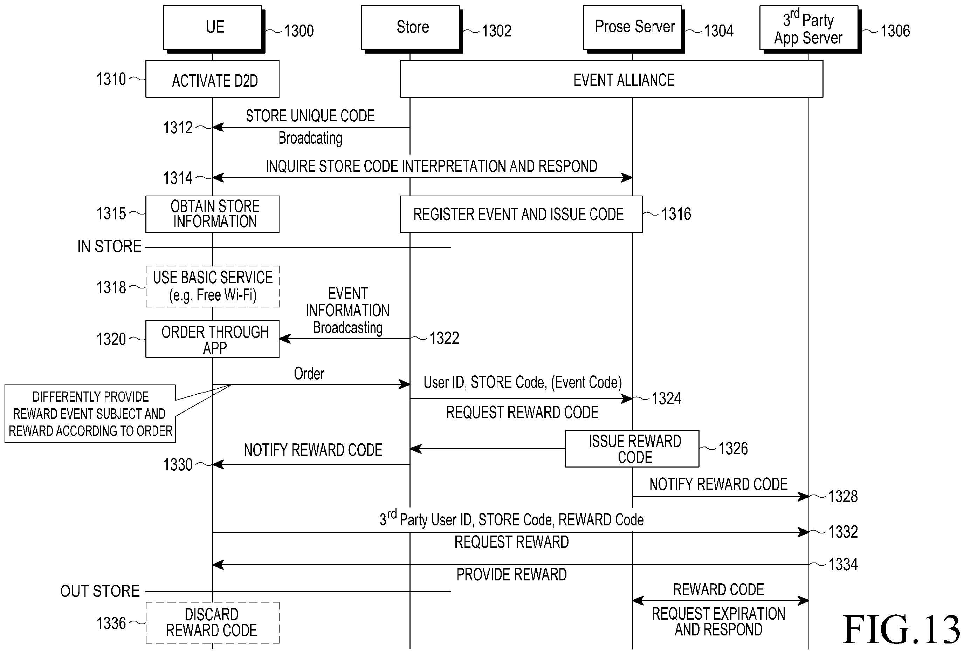

FIG. 13 is a ladder diagram of additional Scenario 1 in a wireless communication system that supports a D2D scheme according to the present disclosure.

A UE 1300 having activated D2D in operation 1310 receives a store's unique code broadcast from a store 1302.

The store 1302 has an event alliance with a ProSe server 1304 (or an operator server) and a 3^{rd} party application server 1206 that exist in an operator network. That is, the store 1302 shares an event for which the operator is in alliance with the 3^{rd} party application server 1306.

The UE 1300 delivers the store's unique code to the ProSe server 1304 to request interpretation of the store 1302 in operation 1314, and obtains information about the store 1302 in operation 1315.

The store 1302 registers the event through the ProSe server 1304 and receives an issued reward code for the event in operation 1316.

The UE 1300 located in the store 1302 (that is, located in a coverage of an AP of the store) uses a basic service (e.g., free Internet, Wi-Fi connection) by using the store's unique code in operation 1318.

If an event such as execution of an order application occurs in the UE 1300 in operation 1320, the UE 1300 receives reward information transmitted by the store 1302 and outputs the reward information on the screen in operation 1322.

If event conditions for a reward (e.g., product ordering and payment) are satisfied, the store 1302 delivers a user ID of the UE 1300 and the store's unique code to the ProSe server 1304 to request a reward code in operation 1324.

The ProSe server 1304 issues the reward code in response to the request for the reward code and delivers the reward code to the store 1302 in operation 1326, and also delivers the reward code to the 3^{rd} party application server 1306 in operation 1328.

The store 1302 notifies the UE 1300 of the issued reward code in operation 1330.

The UE 1300 accesses the 3^{rd} party application server 1306 and transmits the store's unique code, the user ID, the reward code, etc., to request a reward for the event in operation 1332, and the UE 1300 is provided with the reward in operation 1334. Optionally, if the UE 1200 may not be able to receive the store's unique code any longer because of moving out of the store 1202, the reward code is discarded in operation 1336 and the UE 1300 may fail to get a reward for the event.

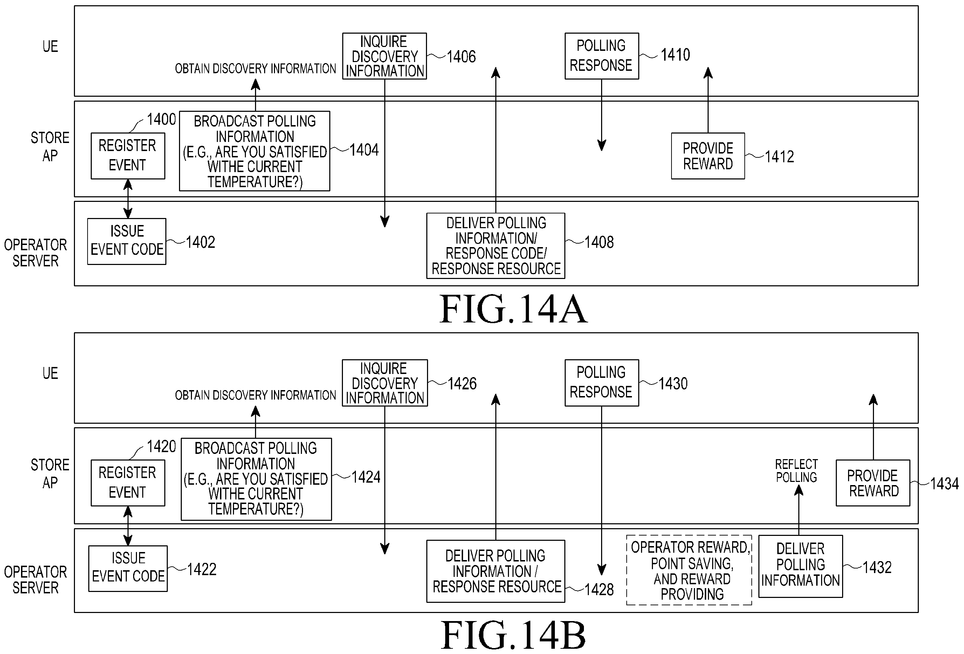

FIG. 14 illustrates additional Advertisement Scenario 2 using a polling service in a wireless communication system that supports a D2D scheme according to the present disclosure.

The present disclosure describes a direct response scheme and a server response scheme (i.e., an indirect response scheme) of a UE as an example of a polling service.

First, referring to (a) of FIG. 14, the direct response scheme will be described.

A store AP (which provides a polling service) registers a polling event in an operator server (or a ProSe server) in operation 1400, and receives a code issued for the polling event in operation 1402.

The store AP broadcasts the issued code to notify the UE of the polling event in operation 1404. The UE receives the broadcast code and transmits the code to the operator server to ask polling information in operation 1406.

The operator server delivers the polling information (e.g., a question like "Are you satisfied with current temperature?"), a response code, and information about a resource for transmitting a response to the UE in operation 1408.

The UE transmits a response to the polling to the store AP by using the response code in the resource indicated by the resource information in operation 1410. The UE also receives a reward for the response from the store AP in operation 1412.

Referring to (b) of FIG. 14, the server response scheme will be described.

The store AP registers a polling event in the operator server in operation 1420, and receives a code issued for the polling event in operation 1422.

The store AP broadcasts the issued code to notify the UE of the polling event in operation 1424. The UE receives the broadcast code and transmits the code to the operator server to ask polling information in operation 1426.

The operator server delivers the polling information, a response code, and information about a resource for transmitting a response to the UE in operation 1428.

The UE transmits a response to the polling to the operator server (instead of to the store AP) by using the response code in the resource indicated by the resource information in operation 1430. The operator server receives a response from the UE and (indirectly) provides the received response to the store AP in operation 1432. If necessary, the operator server collects one or more responses received from the UE(s) and delivers the responses to the store AP. The UE also receives a reward for the response from the store AP in operation 1434.

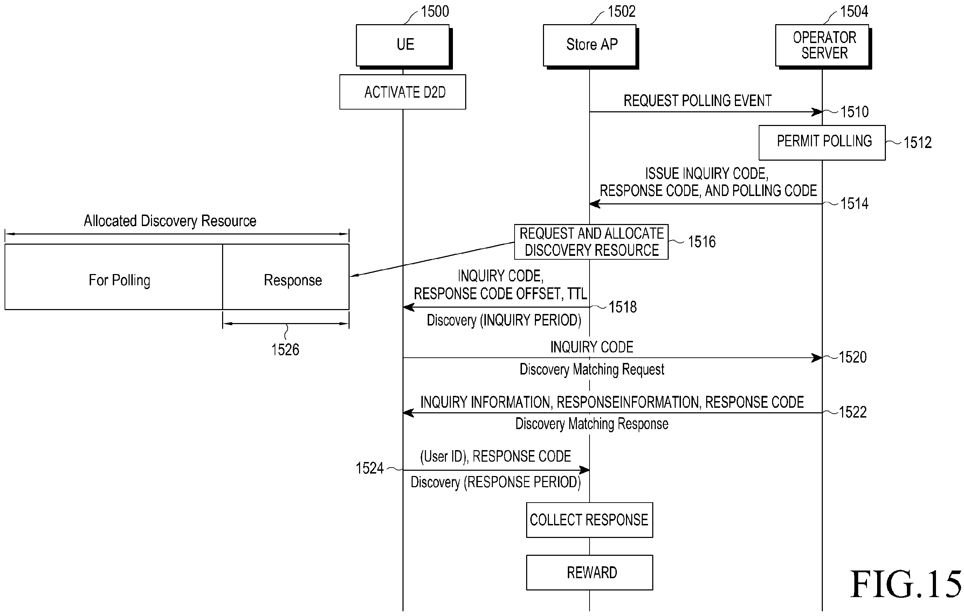

FIG. 15 is a ladder diagram of a method for setting a response period for polling in additional Scenario 2 in a wireless communication system that supports a D2D scheme according to the present disclosure.

In FIG. 15, if a store AP 1502 transmits a request for a polling event to an operator server 1504 in operation 1510, the operator server 1504 permits the requested polling event in operation 1512 and issues an inquiry code (i.e., a polling code) or a response code for the requested polling event in operation 1514.

The store AP 1502 desiring polling requests or allocates a resource needed for polling in operation 1516, and broadcasts the issued code to the UE 1500 in operation 1518. The store AP may also reserve a resource for transmitting a response to the polling to the operator server.

Information to be broadcast may further include offset information and time to live (TTL) information. A period offset used for the polling response may be included in a MAC header, may be determined using a padding period, or may be determined using a separate indicator.

If the UE 1500 listens to a discovery signal, i.e., the polling information, broadcast from the store AP and inquires the operator server 1504 in operation 1520, then the operator server delivers polling information, a response code, or response information corresponding to the inquired code in operation 1522.

The UE 1500 transmits the response code in a location 1526 for a response of a transmission resource in operation 1524, and may mask the user ID with the response code for a reward. The store AP may listen to a corresponding period for receiving a response to polling.

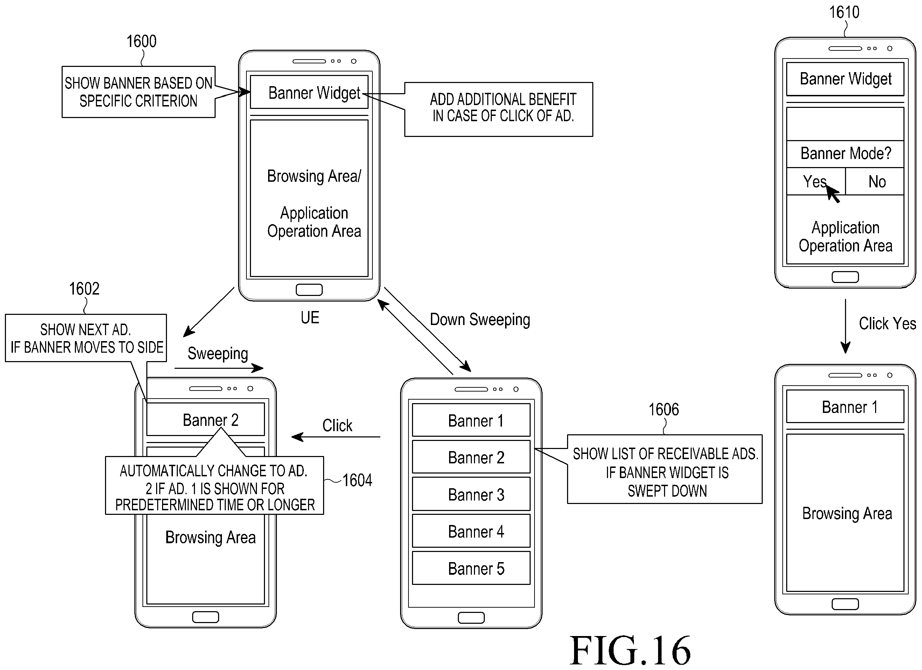

FIG. 16 illustrates UX driving of a UE according to the present disclosure.

A banner is output in one of a top end side 600 or a bottom end side or a plurality of positions on a display of a UE.

Once advertisement is clicked, the UE performs an operation corresponding to the advertisement.

If a user moves a banner part down, several banners are output in the form of a list in operation 1606.

If the user moves the banner part to a side, the UE displays another advertisement in the banner position in operation 1602.

If a plurality of banners exist, a banner in a particular position changes into another advertisement after the elapse of a predetermined time in operation 1604.

For banner setting, whether to accept a banner mode may be asked to the user in operation 1610 and only the UE getting input of accept of the banner mode may output advertisement in a banner widget.

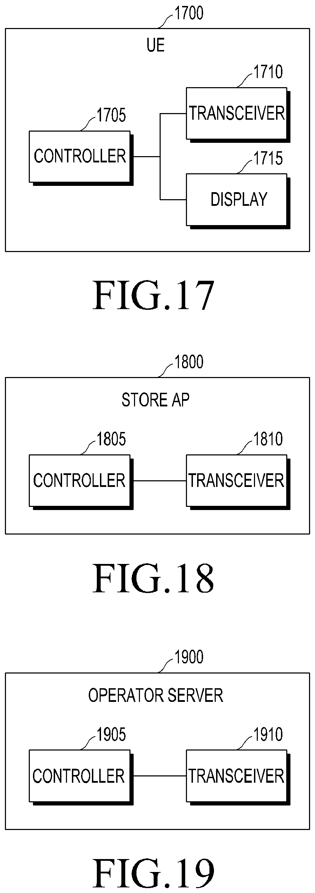

FIG. 17 is a block diagram of a UE according to an embodiment of the present disclosure.

A UE 1700 may include a display 1715 configured to output a banner like advertisement on a screen and a controller 1705 configured to control any operation of the UE 1700. The UE 1700 may further include a transceiver 1710 configured to perform communication with a store AP or various servers.

The controller 1705 may be understood as an entity for performing UE's operations described in all scenarios of the present disclosure.

While the transceiver 1710 and the controller 1705 are illustrated as separate devices for convenience, they may be implemented as one device.

FIG. 18 is a block diagram of a store AP according to an embodiment of the present disclosure.

A store AP 1800 may include a transceiver 1810 configured to perform communication with a UE or various servers and a controller 1805 configured to control any operation of the store AP 1800. The controller 1805 may be understood as an entity for performing operations of a store (or the store AP 1800) described in all scenarios of the present disclosure.

While the transceiver 1810 and the controller 1805 are illustrated as separate devices for convenience, they may be implemented as one device.

FIG. 19 is a block diagram of a network operator server device according to an embodiment of the present disclosure.

An operator server 1900 may include a transceiver 1910 configured to perform communication with a UE or a store AP and a controller 1905 configured to control any operation of the operator server 1900. The controller 1905 may be understood as an entity for performing operations of the operator server 1900 (or an advertising server or a ProSe server) described in all scenarios of the present disclosure.

While the transceiver 1910 and the controller 1905 are illustrated as separate devices for convenience, they may be implemented as one device.

It should be noted that FIGs. 1 through 19 are not intended to limit the scope of the present disclosure. In other words, all of components or operations shown in FIGs. 1 to 19 should not be construed to be essential components for implementation of the present disclosure, and even though only some data units, operations or components are included, the present disclosure may be implemented without departing from the scope and spirit of the disclosure.

Meanwhile, the method and apparatus proposed in the present disclosure will be applied to various wireless communication systems such as a Long Term Evolution (LTE) mobile communication system, a Long Term Evolution Advanced (LTE-A) mobile communication system, a License Assisted Access (LAA)-LTE mobile communication system, a High Speed Downlink Packet Access (HSDPA) mobile communication system, a High Speed Uplink Packet Access (HSUPA) mobile communication system, a 3^{rd} Generation Project Partnership 2 (3GPP2) High Rate Packet Data (HRPD) mobile communication system, a 3GPP2 Wideband Code Division Multiple Access (WCDMA) mobile communication system, an Institute of Electrical and Electronics Engineers (IEEE) 802.16m communication system, an IEEE 802.16e communication system, an Evolved Packet System (EPS), a mobile Internet Protocol (IP) system, a mobile broadcasting service like a digital multimedia broadcasting system, a Digital Video Broadcasting-Handheld (DVB-H), and an Advanced Television Systems Committee-Mobile/Handheld (ATSC-M/H) service, a digital video broadcasting system like an IP television (IPTV) service, an MPEG Media Transport (MMT) system, and so forth.

The above described operations may be implemented by providing a memory device storing a corresponding program code to an entity of a communication system, a function, an AP, a server, or a specific structural element of the UE. That is, the entity, the function, the AP, the server, or the controller of the UE carries out the above described operations by reading and executing the program code stored in the memory device by means of a processor or a Central Processing Unit (CPU).

Various components and modules of the entity, the function, the AP, the server, or a terminal device described therein may be operated using a hardware circuit (e.g., a Complementary Metal Oxide Semiconductor (CMOS)-based logical circuit), firmware, software and/or a hardware circuit such as a combination of hardware, firmware and/or software embedded in a machine-readable medium. For example, various electric configurations and methods may be carried out by using electric circuits such as transistors, logic gates, and on-demand semiconductors.

While embodiments of the present disclosure have been described, various changes may be made without departing the scope of the present disclosure. Therefore, the scope of the present disclosure should be defined by the appended claims and equivalents thereof, rather than by the described embodiments.

## Claims

1. A communication method of a user equipment (UE) in a wireless communication system, the communication method comprising:
transmitting information indicating a permission for outputting a banner on a screen of the UE to a network operator server;
receiving a key used to filter a discovery code from the operator server;
receiving the discovery code from at least one access point (AP) and filtering the received discovery code by using the key;
transmitting a request for banner information regarding the filtered discovery code to the operator server and receiving the banner information in response to the request; and
outputting the banner on the screen by using the received banner information and transmitting an output report of the banner to the operator server.

2. The communication method of claim 1, wherein the key is used to filter an AP subscribing to the operator server for transmission of the banner information through the discovery code.

3. The communication method of claim 1, wherein outputting of the banner on the screen by using the received banner information comprises:
outputting two or more banners corresponding to the filtered discovery code on the screen by using the received banner information, and
wherein the two or more banners are output in a descending order of a signal strength of the filtered discovery code.

4. The communication method of claim 1, wherein outputting of the banner on the screen by using the received banner information comprises:
outputting two or more banners corresponding to the filtered discovery code on the screen by using the received banner information,
whereina banner having the higher relation with content currently output on the screen is output earlier among the two or more banners.

5. The communication method of claim 1, wherein the key indicates that an AP transmitting the discovery code is an AP providing free Internet.

6. A communication method of a network operator server in a wireless communication system, the communication method comprising:
receiving information indicating a permission for outputting a banner on a screen from a user equipment (UE);
transmitting a key used to filter a discovery code to the UE;
receiving a request for banner information regarding the discovery code and transmitting the banner information to the UE in response to the request;
receiving an output report of the banner from the UE; and
changing a charging policy of the UE based on the output report of the banner.

7. The communication method of claim 6, wherein changing of the charging policy of the UE based on the output report of the banner comprises calculating a time for which the banner is output from the output report of the banner and reducing a charge of the UE by using the time for which the banner is output.

8. The communication method of claim 6, further comprising counting a paging view for the banner based on the output report of the banner.

9. The communication method of claim 6, further comprising generating a charging data record (CDR) file based on the output report of the banner.

10. The communication method of claim 6, further comprising:
driving a timer upon receiving the information indicating a permission for outputting the banner on the screen; and
including the banner information in the discovery code based on whether the timer expires.

11. A user equipment (UE) in a wireless communication system, the UE comprising:
a controller configured to transmit information indicating a permission for outputting a banner on a screen of the UE to a network operator server, to receive a key used to filter a discovery code from the operator server, to receive the discovery code from at least one access point (AP) and filter the received discovery code by using the key, to transmit a request for banner information regarding the filtered discovery code to the operator server and receive the banner information in response to the request, and to output the banner on the screen by using the received banner information and transmit an output report of the banner to the operator server; and
a display configured to output the banner on the screen under control of the controller.

12. The UE of claim 11, wherein the UE is configured to operate according to any one of claims 2 through 5.

13. A network operator server in a wireless communication system, the network operator server comprising:
a transceiver configured to communicate with at least one user equipment (UE); and
a controller configured to receive information indicating a permission for outputting a banner on a screen from the UE, to transmit a key used to filter a discovery code to the UE, to receive a request for banner information regarding the discovery code and transmit the banner information to the UE in response to the request, to receive an output report of the banner from the UE, and to change a charging policy of the UE based on the output report of the banner.

14. The network operator server of claim 13, wherein the network operator server is configured to operate according to any one of claims 7 through 10.
